(19) Europäisches Patentamt / European Patent Office / Office européen des brevets

(11) **EP 2 694 316 B1**

(12) **FASCICULE DE BREVET EUROPEEN**

(45) Date de publication et mention
de la délivrance du brevet:
**22.11.2017   Bulletin 2017/47**

(21) Numéro de dépôt: **12717341.7**

(22) Date de dépôt: **30.03.2012**

(51) Int Cl.:
**B60K 35/00** *(2006.01)*        **B60K 37/06** *(2006.01)*
**G02B 6/00** *(2006.01)*        **G06F 3/041** *(2006.01)*
**G06F 3/048** *(2013.01)*

(86) Numéro de dépôt international:
**PCT/FR2012/000120**

(87) Numéro de publication internationale:
**WO 2012/131195 (04.10.2012 Gazette 2012/40)**

(54) **DISPOSITIF D'AFFICHAGE POUR VÉHICULE AUTOMOBILE**

ANZEIGEVORRICHTUNG FÜR EIN KRAFTFAHRZEUG

DISPLAY DEVICE FOR A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **01.04.2011   FR 1100990**

(43) Date de publication de la demande:
**12.02.2014   Bulletin 2014/07**

(73) Titulaire: **Valeo Systemes Thermiques
78320 Le Mesnil Saint Denis (FR)**

(72) Inventeurs:
• **THORAILLER, Maryline
F-94490 Ormesson Sur Marne (FR)**
• **BERAUD, Henry
F-94300 Vincennes (FR)**
• **IRZYK, Michael
F-77000 Melun (FR)**
• **GIROD, Vincent
F-75012 Paris (FR)**

(74) Mandataire: **Pothmann, Karsten
Valeo Etudes Electroniques
Service Propriété Industrielle
76 rue Auguste Perret - ZI Europarc
94046 Creteil Cedex (FR)**

(56) Documents cités:
**DE-A1-102008 009 954     DE-A1-102008 048 448**

## Description

*Domaine technique de l'invention*

La présente invention concerne une plaque transparente destinée à être placée devant un dispositif d'affichage.

La présente invention concerne également une dalle tactile comportant une telle plaque transparente et permettant de réaliser des commandes par simple contact avec l'écran.

La présente invention concerne un module de commande et d'affichage pour véhicule automobile comportant une telle plaque transparente.

Il est connu de munir les véhicules automobiles, par exemple dans une zone centrale de leur planche de bord, d'un module de commande et d'affichage permettant d'afficher des informations et de commander des fonctions de climatisation, d'un système audio, d'un système de téléphonie, d'un système multimédia ou encore d'un système de navigation.

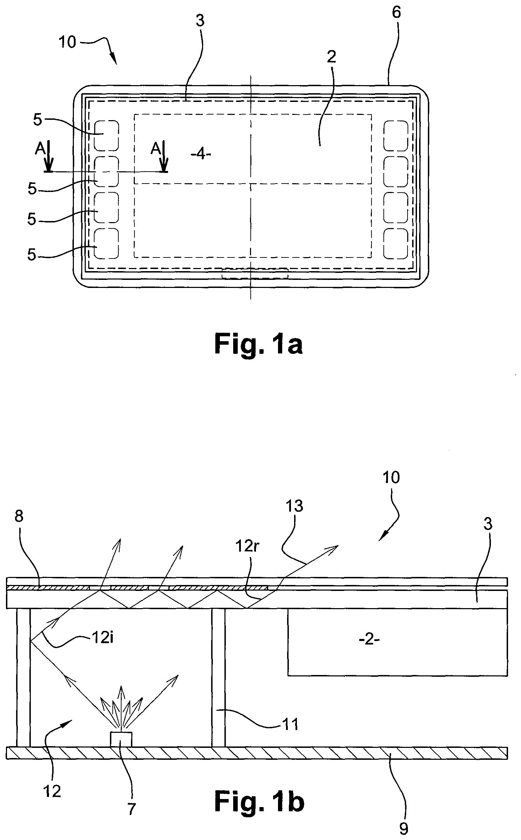

La figure 1a représente une vue schématique de face d'un module 10 pour véhicule automobile. Le module 10 comporte un écran d'affichage 2, pour l'affichage des données d'information ou de commande, une dalle tactile transparente 3 recouvrant l'écran d'affichage 2 et présentant au moins une surface de commande 4 pour la saisie de commande par un utilisateur par de simples contacts avec l'écran, et un boîtier 6 dans lequel sont logés l'écran d'affichage 2 et la dalle tactile 3.

L'écran d'affichage 2 et la dalle tactile 3 permettent ainsi la saisie de commande et l'affichage de données correspondantes. En complément de l'écran d'affichage 2, et en bordure de celui-ci, le module 10 peut également comporter des zones de commande tactile 5 adaptées pour être rétro éclairée par une source lumineuse 7 (figure 1b).

Le rétroéclairage des zones de commande tactile 5 permet alors de simuler des boutons de commande pouvant être visualisés en conduite de jour ou de nuit.

De tels boutons de commande sont réalisés par l'ajout d'un film opaque 8 au dessus de la dalle tactile 3, le film opaque comportant des pictogrammes, transparents ou translucides au dessus des zones de commande tactile 5 apte à laisser passer un faisceau lumineux contrairement au reste du film opaque.

En regard des zones de commande tactile 5 et en face arrière de la dalle tactile 3, les pictogrammes transparents sont éclairés de manière homogène par une source lumineuse diffuse 7, par exemple par une ou plusieurs diodes électroluminescentes (DEL en abrégé) implantées dans un support de type carte électronique 9 et éventuellement guidé par une boîte à lumière ou encore par un guide de lumière (non représenté).

La source de lumière 7 étant diffuse, elle forme un large faisceau de rayons lumineux 12 comportant des rayons lumineux de forte inclinaison par rapport à la normale de la source lumineuse. A cet effet, des rayons incidents 12i arrivent en premier au niveau de l'interface de la dalle tactile 3 (formant un premier dioptre) avec un angle d'incidence tel que les rayons réfractés 12r à l'intérieur de la dalle tactile ont un angle supérieur à l'angle de réflexion totale les empêchant de franchir le second dioptre formé par la seconde interface de la dalle tactile 3 avec l'air ambiant.

Une partie des rayons lumineux se propagent alors à l'intérieur de la dalle tactile transparente 3 formant un flux lumineux de fuite, et peuvent être réfractés sans maîtrise à l'extérieur de la dalle tactile par la présence de défauts ou d'impuretés sur la dalle tactile 3.

Dans certaines conditions, par exemple de nuit et lorsque l'écran d'affichage 2 est éteint, ces fuites de lumière non maîtrisées peuvent occasionner un éclairage perturbateur et non voulu du module de commande et d'affichage, gênant la perception de l'utilisateur des différentes commandes et des différents affichages du module 10. D'autre part, ces fuites de lumières dégradent la perception qualitative de ce type d'installation tactile vis-à-vis des utilisateurs.

Dans ce contexte, la présente invention vise à résoudre au moins un des inconvénients précédemment mentionnés.

A cette fin l'invention propose une plaque transparente comportant une face supérieure et une face inférieure, ladite face supérieure étant destinée à être orientée vers l'utilisateur et ladite face inférieure étant destinée à être orientée vers une source lumineuse, ladite face supérieure étant destinée à être occultée par un moyen de masquage rendant opaque au moins une partie de ladite plaque transparente, ladite plaque transparente étant destinée à recevoir un flux lumineux sur sa face inférieure, une partie de ce flux lumineux se propageant par réflexion dans l'épaisseur de ladite plaque pour former un flux lumineux de fuite, ladite plaque transparente étant caractérisée en ce qu'elle comporte sur sa face inférieure des moyens localisés au moins sur une zone, lesdits moyens permettant de réduire l'intensité du flux lumineux de fuite lors de son passage de part et d'autre de ladite zone.

Grâce à l'invention, le flux lumineux de fuite se propageant à l'intérieur de la plaque transparente est maîtrisé à un endroit déterminé au préalable permettant ainsi d'éviter que celui-ci ne se propage jusque dans une zone non désirée.

Ainsi, la plaque transparente selon l'invention permet de s'affranchir du phénomène de fuite de lumière non contrôlée dans la plaque transparente faisant office de guide de lumière occasionnée par l'utilisation d'une source de lumière diffuse, et par la présence d'impureté et/ou de défauts sur la plaque transparente.

Outre les caractéristiques principales qui viennent d'être mentionnées dans le paragraphe précédent, la dalle tactile, selon l'invention, peut présenter une ou plusieurs caractéristiques supplémentaires ci-dessous, considérées individuellement ou selon toutes les combinaisons techniquement possibles :

- lesdits moyens sont aptes à modifier au moins localement l'un des paramètres de la loi de réfraction à l'une des interfaces de ladite plaque transparente (34), définie par la relation suivante :

$$n_1 \sin(i_1) = n_2 \sin(i_2)$$

- $n_1$ l'indice de réfraction du milieu dans lequel se propage le rayon incident ;
- $i_1$ l'angle d'incidence du rayon incident par rapport à la normale du point d'incidence
- $n_2$ l'indice de réfraction du milieu extérieur au milieu dans lequel se propage le rayon incident :
- $i_2$ l'angle de réfraction du rayon réfracté par rapport à la normale du point d'incidence.

- lesdits moyens sont aptes à modifier au moins localement un des paramètres de la réflexion totale des rayons lumineux se propageant à l'intérieur de ladite plaque transparente, ladite réflexion totale étant définie par la relation :

$$i_{\mathrm{lim}} = \arcsin(\frac{n_2}{n_1})$$

- $n_1$ l'indice de réfraction du milieu dans lequel se propage le rayon incident ;
- $n_2$ l'indice de réfraction du milieu extérieur au milieu dans lequel se propage le rayon incident :
- $i_{\mathrm{lim}}$ l'angle limite du rayon incident pour lequel il y a réflexion totale.

- les moyens sont aptes à modifier le ratio des indices de réfraction au moins au niveau de l'une des interfaces de ladite plaque transparente ;
- lesdits moyens sont un traitement de la surface de ladite plaque transparente ;
- ledit traitement de surface est un dépôt de couche mince ;
- ledit traitement de surface est une peinture opaque ;
- lesdits moyens sont aptes à modifier au moins localement la normale à la surface du milieu dans lequel se propage le rayon incident ;
- ledit traitement de surface est un traitement de surface mécanique apte à modifier la rugosité de ladite dalle tactile ;
- ladite plaque transparente est en verre et/ou en matière plastique.

L'invention a également pour objet une dalle tactile caractérisée en ce qu'elle comporte au moins une plaque transparente selon l'invention.

Selon un mode de réalisation avantageux, ladite dalle est une dalle tactile capacitive ou résistive.

L'invention a également pour objet un dispositif d'affichage caractérisé en ce qu'il comporte un écran d'affichage recouvert par une plaque transparente selon l'invention ou par une dalle tactile selon l'invention.

L'invention a également pour objet un module de commande et d'affichage destiné à être logé dans une planche de bord d'un véhicule automobile, ledit module étant caractérisé en ce qu'il comporte au moins une plaque transparente selon l'invention.

Selon un mode avantageux de l'invention, le module comporte :

- une source lumineuse :
- un moyen de masquage rendant opaque au moins une partie de ladite plaque transparente et comportant au moins une zone transparente apte à être éclairée par ladite source lumineuse, ledit moyen de masquage étant placé au dessus de ladite plaque transparente.

Selon un mode avantageux de l'invention, ledit moyen de masquage est positionné sur ladite face supérieure de ladite plaque transparente.

Selon un mode avantageux de l'invention, le module ladite plaque transparente constitue un élément d'une dalle tactile.

D'autres caractéristiques et avantages de l'invention ressortiront clairement de la description qui en est donnée ci-dessous, à titre indicatif et nullement limitatif, en référence aux différentes figures annexées :

- la figure 1a illustre une vue schématique de face d'un module de commande et d'affichage de véhicule automobile muni d'une dalle tactile connue ;
- la figure 1b illustre une vue schématique en coupe selon un plan A-A du module de commande et d'affichage illustrée à la figure 1a ;
- la figure 2 illustre une vue schématique en coupe d'un premier exemple de réalisation d'un module de commande et d'affichage de véhicule automobile muni d'une dalle tactile comportant une plaque transparente selon l'invention ;
- la figure 3 illustre une vue schématique détaillée d'un second exemple de réalisation d'un module de commande et d'affichage de véhicule automobile muni d'une dalle tactile comportant une plaque transparente selon l'invention.

*Description des formes de réalisation préférées de l'invention*

Les éléments identiques, par structure ou par fonction, apparaissant sur différentes figures conservent, sauf précision contraire, les mêmes références.

Les figures 1a et 1b ont déjà été décrites précédemment en référence à la présentation générale de l'invention.

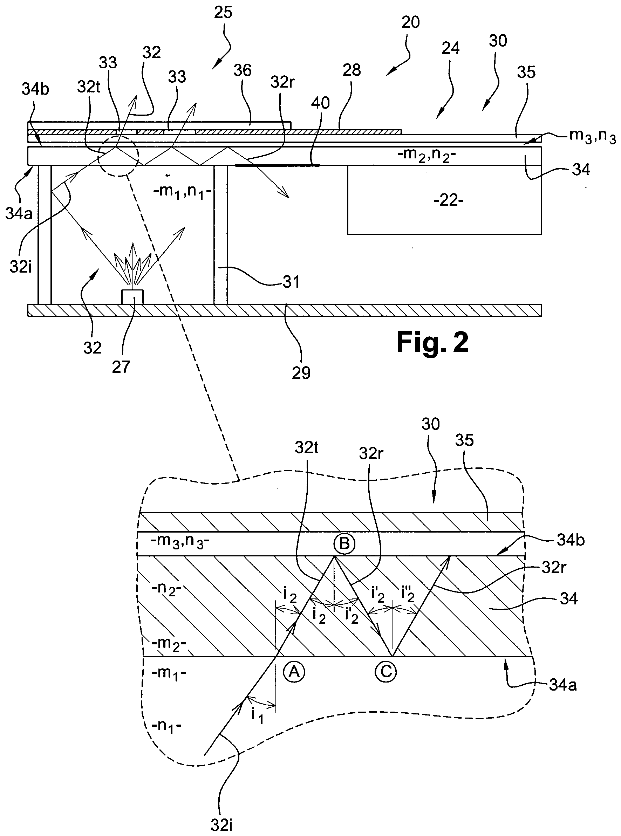

En référence à la figure 2, un module de commande et d'affichage 20 de véhicule automobile selon l'invention comporte un écran d'affichage 22, pour l'affichage des données d'information ou de commande, une dalle tactile transparente 30 recouvrant l'écran d'affichage 22 et présentant au moins une surface de commande 24 pour la saisie de commande par un utilisateur par de simples contacts avec l'écran, et un boîtier (non représenté) dans lequel sont logés l'écran d'affichage 22 et la dalle tactile 30.

Le module de commande et d'affichage 20 est destiné à être logé dans un tableau de bord de véhicule automobile, permettant ainsi à un utilisateur de visualiser facilement les informations affichées sur cet écran ainsi que d'interagir avec le module par contact tactile.

L'écran d'affichage 22 est par exemple un écran TFT (utilisant la technologie de couches minces de transistor ou « Thin Film Transistor » en langue anglaise).

La dalle tactile 30 comporte en outre une zone de commande tactile 25 rétroéclairée par exemple par une source lumineuse 27 diffusant un faisceau lumineux diffus 32, par exemple par une ou plusieurs diodes électroluminescentes (DEL en abrégé) implantées dans un support de type carte électronique 29, le faisceau étant guidé dans une boîte à lumière 31.

Le rétroéclairage de la zone de commande tactile 25 permet de simuler un bouton de commande pouvant être visualisé aussi bien en conduite de jour qu'en conduite de nuit.

A cet effet, le module 20 comporte un film opaque 28 positionné sur la dalle tactile 30 et étendu sur au moins une partie de la dalle tactile 30, notamment au niveau de la zone de commande tactile 25. Le film opaque 28 comporte des pictogrammes 33, transparents ou translucides positionnés au niveau de la zone de commande tactile 25 et préférentiellement en regard de la source lumineuse 27, lesdits pictogrammes 33 transparents étant aptes à laisser passer le faisceau de lumière 32 émis par la source lumineuse 27.

La dalle tactile 30 est une dalle transparente pouvant être de technologie résistive, capacitive, infrarouge, FTIR (pour Frustrated Total Internal Reflection en langue anglaise), NFI (pour Near Field Imaging en langue anglaise), à jauges de contrainte, à ondes de surface.

Quelle que soit la technologie de la dalle tactile utilisée, la dalle tactile 30 permet de déterminer les coordonnées du point où l'utilisateur appuie avec son doigt sur la surface de commande 24, 25 de la dalle 30. Le déplacement ou l'appui du doigt d'un utilisateur provoque la création d'un signal variant avec la localisation et le déplacement de son doigt au contact de la surface tactile de la dalle 30.

Selon l'exemple de réalisation illustré à la figure 2, la dalle tactile 30 est une dalle de type résistive formée par une plaque de verre 34 dont la surface est conductrice, recouverte par un film plastique 35 dont la sous face est conductrice. Les deux couches 34, 35 sont maintenues distantes l'une de l'autre par des cales d'espacement (non représentées).

Le module 20 peut également comporter de façon optionnelle une couche supplémentaire de protection 36 en surface, tel qu'un film coloré, fumé, et/ou antireflet, le film antireflet permettant de limiter les effets de brillance ainsi que les empreintes de traces de doigts sur le module de commande et d'affichage 20.

La source de lumière 27 étant diffuse, elle forme un large faisceau de rayons lumineux 32 avec notamment des rayons lumineux de forte inclinaison par rapport à la normale de la source lumineuse 27.

Un premier dioptre optique A est formé par la surface inférieure 34a de la plaque de verre 34 de la dalle tactile 30, séparant un premier milieu transparent $m_1$, constitué par de l'air présent entre la source lumineuse 27 et la face inférieure 34a de la plaque 34, et un deuxième milieu transparent $m_2$ constitué par le matériau de la dalle tactile 30 (i.e du verre dans notre exemple de réalisation). Les deux milieux $m_1$ et $m_2$ ayant un indice de réfraction différent, respectivement $n_1$ et $n_2$, et avec $n_1 < n_2$, les rayons incidents 32i arrivant sur la surface 34a de la plaque transparente 34 vont être à la fois réfractés et réfléchis. Ainsi, une partie de la lumière est réfléchie à la surface du premier dioptre et une autre partie est réfractée lors de son passage dans le deuxième milieu $m_2$ (i.e le verre dans notre exemple de réalisation).

Il est connu que le changement de direction du rayon réfracté est décrit par les lois de Snell-Descartes, et notamment par la relation suivante :

$$n_1 \sin(i_1) = n_2 \sin(i_2)$$

Avec :

- $n_1$ l'indice de réfraction du milieu $m_1$ dans lequel se propage le rayon incident;
- $n_2$ l'indice de réfraction du milieu $m_2$ extérieur au milieu $m_1$ dans lequel se propage le rayon réfracté ;
- $i_1$ l'angle d'incidence du rayon incident par rapport à la normale au dioptre :
- $i_2$ l'angle de réfraction du rayon réfracté par rapport à la normale au dioptre.

Un deuxième dioptre B est formé par la surface supérieure 34b de la plaque de verre 34 de la dalle tactile 30, séparant le deuxième milieu transparent $m_2$, constitué par le matériau de la dalle tactile 30 (i.e du verre dans notre exemple de réalisation), et un troisième milieu transparent $m_3$ constitué par de l'air, dans notre exemple, présent entre la plaque de verre 34 et le film plastique 35 de la dalle tactile 30.

Lorsque l'indice de réfraction $n_3$, du milieu $m_3$ extérieur au milieu $m_2$, est inférieur à l'indice de réfraction $n_2$ du milieux $m_2$ dans lequel se propage le rayon incident, il est possible que le rayon incident soit totalement réfléchi à l'intérieur du milieu incident si l'angle d'incidence du rayon lumineux est supérieur ou égale à un angle critique, dit angle limite de réfraction. Ce cas de figure est typiquement celui formé par le passage d'un rayon lumineux du verre à l'air, c'est-à-dire lors du passage du milieu $m_2$ au milieu $m_3$ (ou au milieu $m_1$ au niveau d'un troisième dioptre C).

L'angle limite de réfraction au niveau du dioptre B est donné par la relation :

$$i_{\lim B} = Arc\sin(\frac{n_3}{n_2})$$

L'angle limite de réfraction au niveau du dioptre C est donné par la relation :

$$i_{\lim C} = Arc\sin(\frac{n_1}{n_2})$$

Le faisceau lumineux 32 étant diffus, certains rayons incidents 32i arrivent à la surface 34a de la plaque de verre 34 avec un angle d'incidence $i_1$ tel que les rayons réfractés 32t sont alors déviés par le passage du premier dioptre. Ces rayons 32t possèdent un angle $i_2$, par rapport à la normale du deuxième dioptre B, supérieur à l'angle limite de réfraction au-delà duquel, le rayon 32t est totalement réfléchi en rayon 32r à l'intérieur de la plaque en verre 34 (i.e à l'intérieur du milieu $m_2$).

Les rayons 32r se réfléchissent également au niveau du dioptre C, le milieu extérieur $m_1$ étant également de l'air, l'indice de réfraction du milieu $m_1$ est alors inférieur à l'indice de réfraction du verre. Les rayons 32r se propagent donc à l'intérieur de la plaque transparente 34 en verre de la dalle tactile 30. La plaque transparente fait donc office de guide de lumière dans lequel un flux lumineux se propage de manière non limitée.

La dalle tactile 30 comporte localement des moyens 40 aptes à modifier un des paramètres de la réflexion partielle ou totale d'un faisceau ou du flux lumineux 32r se propageant à l'intérieur de la plaque transparente 34 en verre.

Selon un premier mode de réalisation de l'invention, les moyens 40 sont des moyens aptes à modifier le ratio des indices de réfraction au niveau de l'interface de la plaque transparente 34.

L'indice de réfraction $n_1$ du milieu extérieur à la plaque transparente est modifié par la réalisation d'un traitement de surface sur la surface inférieure 34a de la plaque transparente 34 remplaçant ainsi l'air par un matériau dont l'indice de réfraction est supérieur à l'indice de l'air.

Le traitement de surface est avantageusement un dépôt de couche mince, par exemple une couche mince antireflet.

Selon un autre exemple de réalisation avantageux, le traitement de surface est une couche de matière opaque apte à absorber au moins une partie des rayons lumineux. La couche de matière opaque peut être par exemple une couche de peinture noire déposée sur la surface de la plaque transparente 34. Une partie des rayons 32r sont alors absorbés limitant ainsi la quantité de lumière réfléchie à l'intérieur de la plaque transparente 34.

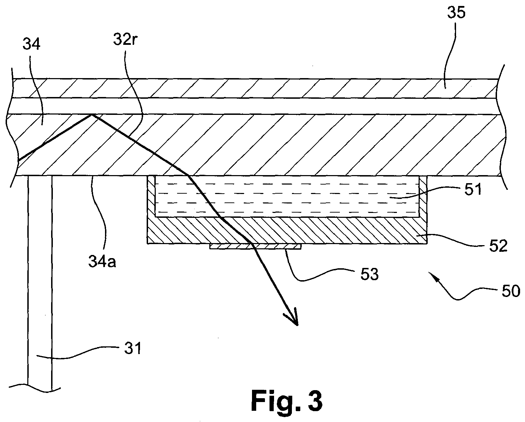

Selon un autre exemple de réalisation, l'indice de réfraction du milieu de réfraction peut également être modifié par l'ajout d'un dispositif 50, illustré à la figure 3, constitué par un réceptacle 52 en matière transparente apte à contenir un liquide 51. De façon, similaire à la description précédente, le réceptacle 50 comporte au niveau de sa face inférieure un traitement de surface 53 localisé permettant d'avoir un indice de réfraction différent de l'indice de réfraction de l'air ou permettant de modifier l'angle de réfraction par un traitement de surface mécanique. Le dispositif 50 est positionné au niveau de la face inférieure 34a de la plaque 34 de sorte que le liquide 51 soit directement en contact avec la face inférieure 34a sans présence d'air.

Selon un deuxième mode de réalisation de l'invention, les moyens 40 sont des moyens aptes à modifier l'angle de réfraction théorique déterminé par la loi de Snell-Descartes en fonction de l'angle d'incidence et des indices de réfraction des milieux d'incidence et de réfraction. Pour cela, un traitement de surface mécanique est appliqué sur la surface de la plaque transparente 34 afin de créer localement des micro-aspérités qui dévient les rayons réfractés de leur angle théorique par modification de la normale à la surface. Cette rugosité locale est par exemple un dépoli de la plaque en verre 34.

Les moyens 40 sont avantageusement positionnés sur la face inférieure 34a de la plaque transparente 34 afin de réfracter les rayons lumineux 32r à l'intérieur du module de commande et d'affichage 20, évitant ainsi que les rayons lumineux ne perturbent l'utilisateur.

Les moyens 40 sont placés en bordure d'une source lumineuse 27 et entre deux zones de commandes distincts 24, 25 ou encore entre deux boutons de commande tactile, afin que le rétroéclairage d'une première zone de commande ne vienne pas perturber une deuxième zone de commande à proximité par des fuites de lumière se propageant à l'intérieur de la dalle tactile.

Ainsi, les rayons lumineux, ou flux lumineux de fuite, se propageant à l'intérieur de la plaque transparente 34 sont maîtrisés en minimisant voire en supprimant le phénomène de la réflexion totale à l'intérieur d'une dalle tactile 30 en verre.

L'invention a été particulièrement décrite avec une dalle de technologie résistive ; toutefois, l'invention est également applicable à d'autres technologies de dalle tactile, telles que des dalles capacitives.

L'invention a été particulièrement décrite avec une dalle tactile formée par une plaque transparente en verre ; toutefois, l'invention est également applicable avec une toute dalle tactile formée par une plaque transparente, quel que soit le matériau de la plaque transparente utilisé.

L'invention a été particulièrement décrite en prenant en compte un faisceau lumineux d'une source lumineuse de type LED ; toutefois, la source lumineuse peut également être un écran d'affichage (TFT, OLED, ...) éclairant la dalle tactile, ou encore tout autre type de source lumineuse émettant un flux lumineux en direction d'une dalle tactile transparente.

## Revendications

1. Plaque transparente (34) comportant une face supérieure (34b) et une face inférieure (34a), ladite face supérieure (34b) étant destinée à être orientée vers l'utilisateur et ladite face inférieure (34a) étant destinée à être orientée vers une source lumineuse (22, 27), ladite face supérieure (34b) étant destinée à être occultée par un moyen de masquage (28) rendant opaque au moins une partie de ladite plaque transparente (34), ladite plaque transparente (34) étant destinée à recevoir un flux lumineux (32) sur sa face inférieure (34a), une partie de ce flux lumineux (32) se propageant par réflexion dans l'épaisseur de ladite plaque (34) pour former un flux lumineux de fuite (32r), ladite plaque transparente (34) étant **caractérisée en ce qu'**elle comporte sur sa face inférieure (34a) des moyens (40) localisés au moins sur une zone, lesdits moyens (40) permettant de réduire l'intensité du flux lumineux de fuite (32r) lors de son passage de part et d'autre de ladite zone.

2. Plaque transparente (34) selon la revendication 1 **caractérisé en ce que** lesdits moyens (40) sont aptes à modifier au moins localement l'un des paramètres de la loi de réfraction à l'une des interfaces de ladite plaque transparente (34), définie par la relation suivante :

$$n_1 \sin(i_1) = n_2 \sin(i_2)$$

- $n_1$ l'indice de réfraction du milieu dans lequel se propage le rayon incident ;
- $i_1$ l'angle d'incidence du rayon incident par rapport à la normale du point d'incidence
- $n_2$ l'indice de réfraction du milieu extérieur au milieu dans lequel se propage le rayon incident :
- $i_2$ l'angle de réfraction du rayon réfracté par rapport à la normale du point d'incidence.

3. Plaque transparente (34) selon la revendication 1 **caractérisée en ce que** lesdits moyens (40) sont aptes à modifier au moins localement un des paramètres de la réflexion totale des rayons lumineux se propageant à l'intérieur de ladite plaque transparente (34), ladite réflexion totale étant définie par la relation :

$$i_{\lim} = \arcsin(\frac{n_2}{n_1})$$

- $n_1$ l'indice de réfraction du milieu dans lequel se propage le rayon incidents ;
- $n_2$ l'indice de réfraction du milieu extérieur au milieu dans lequel se propage le rayon incident :
- $i_{\lim}$ l'angle limite du rayon incident pour lequel il y a réflexion totale.

4. Plaque transparente (34) selon l'une des revendications 1 à 3 **caractérisée en ce que** les moyens (40) sont aptes à modifier le ratio des indices de réfraction à au moins l'une des interfaces de ladite plaque transparente (34).

5. Plaque transparente (34) selon la revendication 4 **caractérisée en ce que** lesdits moyens (40) sont un traitement de la surface de ladite plaque transparente (34).

6. Plaque transparente (34) selon la revendication 5 **caractérisée en ce que** ledit traitement de surface est un dépôt de couche mince.

7. Plaque transparente (34) selon la revendication 5 **caractérisée en ce que** ledit traitement de surface est une peinture opaque.

8. Plaque transparente (34) selon l'une des revendications 1 à 3 **caractérisée en ce que** lesdits moyens (40) sont aptes à modifier au moins localement la normale à la surface du milieu dans lequel se propage le rayon incident.

9. Plaque transparente (34) selon la revendication 8 **caractérisée en ce que** ledit traitement de surface est un traitement de surface mécanique apte à modifier la rugosité de ladite dalle tactile (30).

10. Plaque transparente (34) selon l'une des revendications 1 à 9 **caractérisée en ce que** ladite plaque transparente (34) est en verre et/ou en matière plastique.

11. Dalle tactile (30) **caractérisée en ce qu'**elle comporte au moins une plaque transparente (34) selon l'une des revendications 1 à 10.

12. Dalle tactile (30) selon la revendication 11 **caractérisée en ce que** ladite dalle est une dalle tactile capacitive ou résistive.

13. Dispositif d'affichage **caractérisé en ce qu'**il comporte un écran d'affichage (22) recouvert par une plaque transparente (34) selon l'une des revendication 1 à 10 ou par une dalle tactile (30) selon l'une des revendications 11 à 12.

**14.** Module de commande et d'affichage (20) destiné à être logé dans une planche de bord d'un véhicule automobile, ledit module étant **caractérisé en ce qu'**il comporte au moins une plaque transparente (34) selon l'une des revendications 1 à 10.

**15.** Module de commande et d'affichage (20) selon la revendication 14 **caractérisé en ce qu'**il comporte :

- une source lumineuse (22, 27) :
- un moyen de masquage (28) rendant opaque au moins une partie de ladite plaque transparente (34) et comportant au moins une zone transparente (33) apte à être éclairée par ladite source lumineuse (22, 27), ledit moyen de masquage (28) étant placé au dessus de ladite plaque transparente (34).

**16.** Module de commande et d'affichage (20) selon la revendication 15 **caractérisé en ce que** ledit moyen de masquage (28) est positionné sur ladite face supérieure (34b) de ladite plaque transparente (34).

**17.** Module de commande et d'affichage (20) selon l'une des revendications 14 à 16 **caractérisé en ce que** ladite plaque transparente (34) constitue un élément d'une dalle tactile (30).

**Patentansprüche**

**1.** Transparente Platte (34) mit einer Oberseite (34b) und einer Unterseite (34a), wobei die Oberseite (34b) zum Benutzer orientiert werden soll und die Unterseite (34a) zu einer Lichtquelle (22, 27) orientiert werden soll, wobei die Oberseite (34b) durch ein Maskierungsmittel (28) verdeckt werden soll, das zumindest einen Abschnitt der transparenten Platte (34) undurchsichtig macht, wobei die transparente Platte (34) an ihrer Unterseite (34a) einen Lichtfluss (32) empfangen soll, wobei ein Teil dieses Lichtflusses (32) sich durch Reflexion in der Dicke der Platte (34) ausbreitet, um einen Streulichtfluss (32r) zu bilden, wobei die transparente Platte (34) **dadurch gekennzeichnet ist, dass** sie an ihrer Unterseite (34a) Mittel (40) umfasst, die auf mindestens eine Zone lokalisiert sind, wobei die Mittel (40) es ermöglichen, die Intensität des Streulichtflusses (32r) bei seinem Durchgang auf beiden Seiten der Zone zu verringern.

**2.** Transparente Platte (34) nach Anspruch 1, **dadurch gekennzeichnet, dass** die Mittel (40) zumindest lokal einen der Parameter des Brechungsgesetzes an einer der Grenzflächen der transparenten Platte (34) modifizieren können, das durch die folgende Beziehung definiert ist:

$$n_1 \ \sin(i_1) \ = \ n_2 \ \sin(i_2)$$

wobei

- $n_1$ der Brechungsindex des Milieus ist, in dem sich der einfallende Strahl ausbreitet;
- $i_1$ der Einfallwinkel des einfallenden Strahls in Bezug auf die Normale des Einfallspunkts ist;
- $n_2$ der Brechungsindex des Milieus außerhalb des Milieus ist, in dem sich der einfallende Strahl ausbreitet;
- $i_2$ der Brechungswinkel des gebrochenen Strahls in Bezug auf die Normale des Einfallspunkts ist.

**3.** Transparente Platte (34) nach Anspruch 1, **dadurch gekennzeichnet, dass** die Mittel (40) zumindest lokal einen der Parameter der Totalreflexion der Lichtstrahlen modifizieren können, die sich im Inneren der transparenten Platte (34) ausbreiten, wobei die Totalreflexion durch die folgende Beziehung definiert ist:

$$i_{lim} \ = \ \arcsin(n_2/n_1)$$

wobei

- $n_1$ der Brechungsindex des Milieus ist, in dem sich der einfallende Strahl ausbreitet;
- $n_2$ der Brechungsindex des Milieus außerhalb des Milieus ist, in dem sich der einfallende Strahl ausbreitet;
- $i_{lim}$ der Grenzwinkel des einfallenden Strahls ist, für den eine Totalreflexion besteht.

**4.** Transparente Platte (34) nach einem der Ansprüche 1 bis 3, **dadurch gekennzeichnet, dass** die Mittel (40) das Verhältnis der Brechungsindizes an mindestens einer der Grenzflächen der transparenten Platte (34) modifizieren können.

**5.** Transparente Platte (34) nach Anspruch 4, **dadurch gekennzeichnet, dass** die Mittel (40) eine Behandlung der Oberfläche der transparenten Platte (34) sind.

**6.** Transparente Platte (34) nach Anspruch 5, **dadurch gekennzeichnet, dass** die Oberflächenbehandlung eine Abscheidung einer Dünnschicht ist.

**7.** Transparente Platte (34) nach Anspruch 5, **dadurch gekennzeichnet, dass** die Oberflächenbehandlung ein undurchsichtiger Anstrich ist.

**8.** Transparente Platte (34) nach einem der Ansprüche 1 bis 3, **dadurch gekennzeichnet, dass** die Mittel (40) zumindest lokal die Normale zur Oberfläche des Milieus, in dem sich der einfallende Strahl ausbreitet, modifizieren können.

**9.** Transparente Platte (34) nach Anspruch 8, **dadurch gekennzeichnet, dass** die Oberflächenbehandlung eine mechanische Oberflächenbehandlung ist, die die Rauheit des Berührungsbildschirms (30) modifizieren kann.

**10.** Transparente Platte (34) nach einem der Ansprüche 1 bis 9, **dadurch gekennzeichnet, dass** die transparente Platte (34) aus Glas und/oder Kunststoff besteht.

**11.** Berührungsbildschirm (30), **dadurch gekennzeichnet, dass** er mindestens eine transparente Platte (34) nach einem der Ansprüche 1 bis 10 umfasst.

**12.** Berührungsbildschirm (30) nach Anspruch 11, **dadurch gekennzeichnet, dass** der Bildschirm ein kapazitiver oder Widerstands-Berührungsbildschirm ist.

**13.** Anzeigevorrichtung, **dadurch gekennzeichnet, dass** sie einen Anzeigebildschirm (22) umfasst, der mit einer transparenten Platte (34) nach einem der Ansprüche 1 bis 10 oder mit einem Berührungsbildschirm (30) nach einem der Ansprüche 11 bis 12 bedeckt ist.

**14.** Steuer- und Anzeigemodul (20), das in einem Armaturenbrett eines Kraftfahrzeugs aufgenommen werden soll, wobei das Modul **dadurch gekennzeichnet ist, dass** es mindestens eine transparente Platte (34) nach einem der Ansprüche 1 bis 10 umfasst.

**15.** Steuer- und Anzeigemodul (20) nach Anspruch 14, **dadurch gekennzeichnet, dass** es Folgendes umfasst:

 - eine Lichtquelle (22, 27);
 - ein Maskierungsmittel (28), das zumindest einen Teil der transparenten Platte (34) undurchsichtig macht und mindestens eine transparente Zone (33) umfasst, die durch die Lichtquelle (22, 27) beleuchtet werden kann, wobei das Maskierungsmittel (28) über der transparenten Platte (34) angeordnet ist.

**16.** Steuer- und Anzeigemodul (20) nach Anspruch 15, **dadurch gekennzeichnet, dass** das Maskierungsmittel (28) an der Oberseite (34b) der transparenten Platte (34) angeordnet ist.

**17.** Steuer- und Anzeigemodul (20) nach einem der Ansprüche 14 bis 16, **dadurch gekennzeichnet, dass** die transparente Platte (34) ein Element eines Berührungsbildschirms (30) bildet.

**Claims**

**1.** Transparent sheet (34) having an upper face (34b) and a lower face (34a), said upper face (34b) being intended to be oriented toward the user and said lower face (34a) being intended to be oriented towards a light source (22, 27), said upper face (34b) being intended to be occulted by a masking means (28) that makes at least one portion of said transparent sheet (34) opaque, said transparent sheet (34) being intended to receive a light flux (32) on its lower face (34a), a portion of this light flux (32) propagating by reflection in the thickness of said sheet (34) in order to form a leakage light flux (32r), said transparent sheet (34) being **characterized in that** it includes, on its lower face (34a) localized means (40) at least in one zone, said means (40) allowing the intensity of the leakage light flux (32r) to be decreased as it passes from one side of said zone to the other.

**2.** Transparent sheet (34) according to Claim 1, **characterized in that** said means (40) are able to modify, at least locally, one of the parameters of the law of refraction at one of the interfaces of said transparent sheet (34), as defined by the following relationship:

$$n_1 \sin(i_1) = n_2 \sin(i_2)$$

 - $n_1$ the refractive index of the propagation medium of the incident ray;
 - $i_1$ the angle of incidence of the incident ray with respect to the normal at the point of incidence;
 - $n_2$ the refractive index of the medium exterior to the propagation medium of the incident ray; and
 - $i_2$ the angle of refraction of the refracted ray with respect to the normal at the point of incidence.

**3.** Transparent sheet (34) according to Claim 1, **characterized in that** said means (40) are able to modify, at least locally, one of the parameters of the total internal reflection of light rays propagating in the interior of said transparent sheet (34), said total internal reflection being defined by the relationship:

$$i_{\lim} = \arcsin\left(\frac{n_2}{n_1}\right)$$

- $n_1$ the refractive index of the propagation medium of the incident ray;
- $n_2$ the refractive index of the medium exterior to the propagation medium of the incident ray; and
- $i_{lim}$ the critical angle at which the incident ray is totally internally reflected.

4. Transparent sheet (34) according to one of Claims 1 to 3, **characterized in that** the means (40) are able to modify the ratio of the refractive indices at at least one of the interfaces of said transparent sheet (34).

5. Transparent sheet (34) according to Claim 4, **characterized in that** said means (40) are a treatment of the surface of said transparent sheet (34).

6. Transparent sheet (34) according to Claim 5, **characterized in that** said surface treatment is a thin-film layer.

7. Transparent sheet (34) according to Claim 5, **characterized in that** said surface treatment is an opaque paint.

8. Transparent sheet (34) according to one of Claims 1 to 3, **characterized in that** said means (40) are able to modify, at least locally, the normal to the surface of the propagation medium of the incident ray.

9. Transparent sheet (34) according to Claim 8, **characterized in that** said surface treatment is a mechanical surface treatment able to modify the roughness of said touch panel (30).

10. Transparent sheet (34) according to one of Claims 1 to 9, **characterized in that** said transparent sheet (34) is made of glass and/or of plastic.

11. Touch panel (30) **characterized in that** it includes at least one transparent sheet (34) according to one of Claims 1 to 10.

12. Touch panel (30) according to Claim 11, **characterized in that** said panel is a resistive or capacitive touch panel.

13. Displaying device **characterized in that** it includes a displaying screen (22) covered with a transparent sheet (34) according to one of Claims 1 to 10 or with a touch panel (30) according to one of Claims 11 to 12.

14. Displaying and controlling module (20) intended to be housed in a dashboard of a motor vehicle, said module being **characterized in that** it includes at least one transparent sheet (34) according to one of Claims 1 to 10.

15. Displaying and controlling module (20) according to Claim 14, **characterized in that** it includes:

    - a light source (22, 27); and
    - a masking means (28) making at least one portion of said transparent sheet (34) opaque and including at least one transparent zone (33) able to be illuminated by said light source (22, 27), said masking means (28) being placed above said transparent sheet (34).

16. Displaying and controlling module (20) according to Claim 15, **characterized in that** said masking means (28) is positioned on said upper face (34b) of said transparent sheet (34).

17. Displaying and controlling module (20) according to one of Claims 14 to 16, **characterized in that** said transparent sheet (34) is an element of a touch panel (30).

**Fig. 1a**

**Fig. 1b**

**Fig. 2**

Fig. 3